# EUROPÄISCHE PATENTANMELDUNG

(11) **EP 1 342 619 A2**
(43) Veröffentlichungstag der Anmeldung: **10.09.2003**
(21) Anmeldenummer: 03003017.5
(22) Anmeldetag: 12.02.2003
(51) Int. Cl.: B60Q 3/04, G05G 1/10

(54) **Optisches Anzeigeelement**

(30) Priorität: 05.03.2002 DE 10209622
(71) Anmelder: Preh-Werke GmbH & Co. KG, 97616 Bad Neustadt a.d. Saale (DE)
(72) Erfinder: Glienicke, Haiko, 97616 Bad Neustadt (DE); Haub, Michael, 97688 Bad Kissingen (DE)
(74) Vertreter: Dietrich, Barbara

(57) **Zusammenfassung**

Das optische Anzeigeelement (10) zeichnet sich dadurch aus, dass ein Such- und Funktionssymbol (3) mit einem gemeinsamen optischen Anzeigeelement (10) versehen sind, wobei die Intensität der gemeinsamen Lichteinspeisung in seiner Helligkeit an die aktuelle Umgebungshelligkeit (20) angepasst und geregelt wird. Die Regelung erfolgt über ein PWM-Signal (pulsweitenmoduliert) einer Ansteuerung (7).

Das Anzeigeelement (10) selbst besteht aus einem gemeinsamen, vorzugsweise eingefärbten Kunststoff (5), der die Such- als auch die Funktionssymbolik (3) ausleuchtet, wobei der Bereich der gemeinsamen Symbolik (3) von einem auf dem Kunststoff (5) befindlichen farbiger Lack (6) ausgenommen ist. Die Lichtführung von wenigstens einer Lichtquelle (1) zum Kunststoff (5) erfolgt vorzugsweise über einen Lichtleiter (1), in den das Licht (a) eingekoppelt wird, kann aber auch durch wenigstens eine direkt unter dem Kunststoff (5) befindliche Lichtquelle (1) erfolgen.

## Beschreibung

Die Erfindung betrifft ein optisches Anzeigeelement nach dem Oberbegriff des Patentanspruchs 1.

Symbole auf Bedien- bzw. Betätigungselementen, beispielsweise in einem Kraftfahrzeug, werden zur besseren Erkennbarkeit und Unterscheidung insbesondere bei Nachtfahrten mittels Lichtquellen aus- bzw. hinterleuchtet. Es ist bekannt, dass eine Forderung bei der Ausleuchtung derartiger Betätigungselemente darin besteht, für das Nacht- und Tagdesign die Symbole gleichmäßig auszuleuchten.

In der Praxis werden die Such- als auch die Funktionssymbole dazu getrennt voneinander ausgeleuchtet. Je nach Größe des Betätigungselementes erfolgt die Ausleuchtung direkt oder über ein Lichtleitersystem. Für die Ausleuchtung des Funktionssymbols wird beispielsweise ein Lichtleiter in den Knopfbereich geführt und das Licht einer Lichtquelle in das Funktionssymbol eingekoppelt. Die Ausleuchtung des Suchsymbols erfolgt durch seitliche Einkopplung des Lichtes über einen weiteren Lichtleiter.

So beschreiben die DE 198 40 070 A1, die DE 197 38 666 C1 und die DE 198 53 819 A1 derartige, hinterleuchtete Betätigungselemente. Insbesondere in der letztgenannten wird eine Such- oder eine Funktionsbeleuchtung erkennbar gemacht, wobei in einer Ausführung vorgeschlagen wird, eine Kappe des Schalters aus transparenten Material zu fertigen, welches in einem ersten Arbeitsgang in einer Farbe des Symbols lackiert wird. In einem zweiten Arbeitsgang wird dann die endgültige Oberflächenfarbe der Kappe aufgetragen. Um die Farbe das Symbols freizulegen, wird die Farbe der Oberfläche dann mit einem Laser derart entfernt, dass das Symbol konturgenau abgebildet wird.

Ein Verfahren und eine Anordnung zur Einstellung der Helligkeit eines Leuchtmittels ist in der DE 196 02 891 A1 nachlesbar. Nach der Herstellung einer Anzeige wird in Abhängigkeit von der Helligkeit des Leuchtmittels ein Korrekturfaktor bestimmt, mittels dem die Steuerspannung oder der Steuerstrom des Leuchtmittels eingestellt wird, um eine gleichmäßige Ausleuchtung bzw. Anzeigehelligkeit zu erreichen.

Aufgabe der Erfindung ist, eine optisches Anzeigeelement insbesondere für ein Such- und Funktionssymbol aufzuzeigen, bei der die Leuchtdichte als auch die Erkennbarkeit auch bei Sonnenlichteinstrahlung wesentlich erhöht wird.

Gelöst wird die Aufgabe durch die Merkmale des Patentanspruchs 1.

Der Erfindung liegt die Idee zugrunde, ein Suchsymbol als auch ein zugehöriges Funktionssymbol mit einem gemeinsamen optischen Anzeigeelement zu versehen, wobei die Intensität der gemeinsamen Lichteinspeisung in seiner Helligkeit an die aktuelle Sonnenlichteinstrahlung angepasst und geregelt wird. Die Regelung erfolgt über ein PWM-Signal (pulsweitenmoduliert) einer Ansteuerung.
Das Anzeigeelement selbst besteht aus einem gemeinsamen, vorzugsweise eingefärbten Kunststoff, der die Such- als auch die Funktionssymbolik ausleuchtet, wobei der Bereich der gemeinsamen Symbolik von einem auf dem Kunststoff befindlichen farbiger Lack ausgenommen ist. Der Lack ist vorzugsweise ein Laserlack, wodurch dieser Bereich dann andersfarbig aber auch mit einer anderen Lichtintensität als der Symbol-Bereich durchstrahlt werden kann. Im Sonderfall ist der Lack-Bereich dunkel. Die Lichtführung von wenigstens einer Lichtquelle zum Kunststoff erfolgt vorzugsweise über einen Lichtleiter, in den das Licht eingekoppelt wird, kann aber auch durch wenigstens eine direkt unter dem Kunststoff befindliche Lichtquelle erfolgen.
Zur Optimierung von Lichttransmission und Ablesbarkeit der Anzeige (des Symbols) des Anzeige- bzw. Betätigungselementes werden zudem die Lackeinfärbung, die Kunststoffeinfärbung und die Dicke der zu durchleuchtenden Kunststoffschicht (des Anzeigeelementes) aufeinander abgestimmt. Dabei wird die Wandstärke für eine maximale Transmission bei hinreichender Reflexion minimiert. Farborte von Lack und gelasertem Kunststoff werden auf großen Kontrast optimiert.

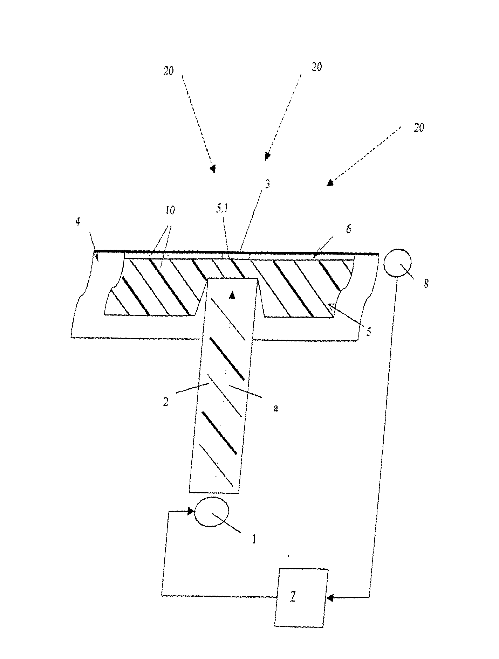

Anhand eines Ausführungsbeispieles mit Zeichnung soll die Erfindung näher erläutert werden.
Es zeigt die einzige Figur eine Schnittdarstellung der kombinierten Such- und Funktionsanzeige.

Mit 1 ist eine Lichtquelle, beispielsweise eine LED, gekennzeichnet, von der Licht a in einen Lichtleiter 2 eingespeist und an ein Such- und Funktionssymbol 3 eines hier nur angedeuteten Betätigungselementes 4 geleitet wird. Der Lichtleiter 2 ist mit einem beispielsweise eingefärbten Kunststoff 5 vorzugsweise physikalisch verbunden. Diese physikalische Verbindung kann dabei mittels Anspritzen des Lichtleiters 2 an den Kunststoff 5 erfolgen. Auf dem Kunststoff 5 ist ein Lack 6 aufgebracht, wobei dieser im Bereich des kombinierten Such- und Funktionssymbols 3 ausgenommen ist, was vorzugsweise durch ein Freilasern der Kunststoffoberfläche in diesem Bereich 5.1 oder in Einlege- bzw. Umspritztechnik hergestellt wird. Der Kunststoff 5 ist transluzent.
Der Kunststoff 5 mit aufgebrachtem Lack 6 bilden dabei ein optisches Anzeigeelement 10 für das Such- und Funktionssymbol 3.

Die Ausleuchtung des kombinierten Such- und Funktionssymbols 3 erfolgt über ein PWM-Signal einer Ansteuerung 7, beispielsweise durch einen Mikrocomputer, um die Leuchtdichte in der LED 1 in Abhängigkeit von der Sonneneinstrahlung 20 regeln zu können. Über einen opto-elektronischen Sensor 8, beispielsweise einen Phototransistor, wird die zur Regelung der Helligkeit des Such- und Funktionssymbols 3 notwendige IST-Grösse, die Umgebungshelligkeit, gemessen und der Ansteuerung 7 zugeführt. Die Dimmung erfolgt dann in Abhängigkeit dieser IST-Grösse. Dabei ist es vorteilhaft, den Sensor 8 in unmittelbarer Nähe zum Symbol 3 anzubringen, damit auf beide eine gleiche Sonneneinstrahlung 20 einwirkt. Es ist aber auch möglich, einen zentralen Sonnenstandssensor (nicht näher dargestellt) zur Regelung zu nutzen.

In der Praxis hat sich ein einstellbarer Faktor ergeben, beispielsweise von bis zu ca. 5000:1, um den die Leuchtdichte gedimmt, d.h., verändert werden kann. Dieser Bereich ist jedoch nicht als beschränkend anzusehen, sondern je nach Anforderung variierbar. Bei der Helligkeitsregelung der Ausleuchtung des kombinierten Such- und Funktionssymbols 3 kann somit ohne Probleme eine Leuchtstärke von 0,3 bis 1500 Candela/m³ abgedeckt werden, wobei auch dieses Maß nicht als einschränkend zu sehen ist.

Der Einfluß einer bei hohen Strömen (Eigenerwärmung) auftretenden Nichtlinearität einer Lichtstärke/Strom-Kennlinie der jeweiligen LED 1 (LED-Typ) kann zudem mittels einer in der Software der Ansteuerung 7 abgelegten Kennlinie ausgeglichen werden, wobei das PWM-Verhältnis vorzugsweise angepaßt wird.

Bei Abstimmung des Emissionsspektrums der LED 1 auf das Transmissionsspektrum des Kunststoffes 5 (oder umgekehrt) können auch verschiedene Farbkombinationen für Auflicht- und Durchlicht geschaffen werden.

Zur maximalen Lichteinkopplung des Lichtes a in den Lichtleiter 2 wird der Abstand zwischen der LED 1 und dem Lichtleiter 2 minimiert.
Bei einer größeren gemeinsamen Symbolfläche bietet es sich an, mehrere Lichtquellen vorzusehen, die das Licht a in den vorzugsweise gemeinsamen Lichtleiter 2 einkoppeln. Ist zudem ein ausreichender Bauraum vorhanden, kann ein Farbumschlag zwischen der Such- und der Funktionsbeleuchtung eingebunden werden, beispielsweise durch eine weitere farbige Lichtquelle.

Die Regelung der Leuchtdichte erfolgt über die vom Sensorelement 8 erfaßte Beleuchtungsstärke. Unterhalb eines Schwellenwertes der Beleuchtungsstärke wird die Leuchtdichte über ein Dimmsignal eingestellt, oberhalb eines Schwellenwertes der Beleuchtungsstärke wird die Leuchtdichte über das mittels des Sensorsignals festgelegte PWM-Verhältnis nachgeführt Der Schwellenwert entspricht der Beleuchtungsstärke während der Dämmerung.

## Patentansprüche

1. Optisches Anzeigeelement, in welches Licht (a) wenigstens einer Lichtquelle (1) eingespeist wird, **dadurch gekennzeichnet, dass**
- ein Such- und ein dazugehöriges Funktionssymbol (3) über das Anzeigeelement (10) gemeinsam ausgeleuchtet werden und die
- Intensität der Ausleuchtung und damit die Leuchtdichte der Lichtquelle (1) in Abhängigkeit einer Sonneneinstrahlung (20) geregelt wird, die von einem opto-elektronischen Sensor (8) ermittelt wird, wobei
- in einer Ansteuerung (7) über einen Vergleich mit der Umgebungshelligkeit (20) ein PWM-Signal zur Ansteuerung der Lichtquelle (1) erzeugt wird.

2. Anzeigeelement nach Anspruch 1, **dadurch gekennzeichnet, dass** das Anzeigeelement (10) ein eingefärbter, transluzenter Kunststoff (4) ist, auf dem Bereichsweise ein farbiger Lack (5) aufgebracht ist.

3. Anzeigeelement nach Anspruch 2, **dadurch gekennzeichnet, dass** der Lack (5) ein Laserlack ist.

4. Anzeigeelement nach einem der Ansprüche 1 bis 3, **dadurch gekennzeichnet. dass** das Licht (a) über einen Lichtleiter (1) in das Anzeigeelement (10) geführt wird.

5. Anzeigeelement nach einem der Ansprüche 1 bis 4, **dadurch gekennzeichnet. dass** der Lichtleiter (11) mit dem Anzeigeelement (10) fest verbunden ist.

6. Anzeigeelement nach einem der Ansprüche, **dadurch gekennzeichnet, dass** die Lackeinfärbung, die Kunststoffeinfärbung als auch die Dicke des Anzeigeelementes (7) aufeinander abgestimmt werden.

7. Anzeigeelement nach einem der Ansprüche, **dadurch gekennzeichnet, dass** eine-Lichtstärke/Strom-Kennlinie der Lichtquelle (1) in der Software der Ansteuerung (7) abgelegt ist.

8. Anzeigeelement nach einem der Ansprüche, **dadurch gekennzeichnet, dass** durch Abstimmung des Emissionsspektrums der Lichtquelle (1) auf das Transmissionsspektrum des Kunststoffes (5) oder umgekehrt verschiedene Farbkombinationen für Auflicht- und Durchlicht geschaffen werden können.

9. Anzeigeelement nach einem der Ansprüche, **dadurch gekennzeichnet, dass** der Abstand zwischen der Lichtquelle (1) und dem Lichtleiter (2) minimiert ist.

10. Anzeigeelement nach einem der Ansprüche, **dadurch gekennzeichnet, dass** bei einer größeren gemeinsamen Symbolfläche mehrere Lichtquellen (1) vorzusehen sind, die das Licht (a) in eine gemeinsamen Lichtleiter (2) einkoppeln.

11. Anzeigeelement nach einem der Ansprüche, **dadurch gekennzeichnet, dass** ein Farbumschlag zwischen der Such- und der Funktionsbeleuchtung eingebunden ist.
